# EUROPÄISCHE PATENTANMELDUNG

(11) **EP 1 156 261 A2**
(43) Veröffentlichungstag der Anmeldung: **21.11.2001**
(21) Anmeldenummer: 01106195.9
(22) Anmeldetag: 14.03.2001
(51) Int. Cl.: F16M 11/04

(54) **Geräteträgerarm**

(30) Priorität: 18.05.2000 DE 10024110
(71) Anmelder: Wilfried Krömker GmbH, 31675 Bückeburg (DE)
(72) Erfinder: Krömker, Wilfried, 31675 Bückeburg (DE)
(74) Vertreter: Gerstein, Hans Joachim, Dipl.-Ing.

(57) **Zusammenfassung**

Ein Geräteträgerarm (1) mit einem verschwenkbar an einem Fußteil (3) angelenkten Trägerarm (2) und mit einer Kalottenaufnahme (22) zum Tragen eines Gerätes, bei dem Kalottenaufnahme (22) verschwenkbar an dem Trägerarm (2) angelenkt ist, hat eine selbstarretierende Gasdruckfeder (5), die an das Fußteil (3) und den Trägerarm (3) angelenkt ist, und hat einen Auslösehebel (9), der mit einem Arretierbolzen (7) der Gasdruckfeder (5) zum Auslösen bzw. Arretieren der Gasdruckfeder (5) zusammen wirkt, wobei ein Betätigungselement (12) zum stufenlosen Verstellen des Auslösehebels (9) und des Arretierbolzens (7) vorgesehen ist, um den Geräteträgerarm (1) in seiner Höhe zu verstellen und in gewünschten Positionen zu arretieren.

## Beschreibung

Die Erfindung betrifft einen Geräteträgerarm mit einem verschwenkbar an ein Fußteil angelenkten Trägerarm, mit einer Kalottenaufnahme zum Tragen eines Gerätes, wobei die Kalottenaufnahme verschwenkbar an dem Trägerarm angelenkt ist, mit einer selbstarretierenden Gasdruckfeder, die an das Fußteil und den Trägerarm angelenkt ist, mit einem Auslösehebel, der mit einem Arretierbolzen der Gasdruckfeder zum Auslösen bzw. Arretieren zusammen wirkt.

Geräteträgerarme sind in vielfältigen Ausführungen bekannt. Die Trägerarme sind hierbei zumeist reibschlüssig mit einem Fußteil verbunden, wobei die zur Verstellung des Trägerarms notwendige Kraft durch Verändern des Reischlusses an der Verbindung des Trägerarms mit dem Fußteil eingestellt werden kann. Zur Einstellung ist meistens eine Flügelmutter oder dergleichen vorgesehen. Nachteilig ist bei der Bedienung eines derartigen Trägerarms, dass zwei Hände zur Bedienung erforderlich sind, wobei mit einer Hand die Flügelmutter zum Lösen bzw. Arretieren und die andere Hand zur Betätigung des Trägerarms benötigt wird

In dem deutschen Gebrauchsmuster 1 780 384 U ist eine Kalotte für einen Geräteträger zum Tragen eines Gerätes beschrieben, die eine kugelsegmentförmig gewölbte Kalottenoberschale, eine reibschlüssig in der Kalottenoberschale angeordnete Andruckscheibe und ein Kalottenunterteil mit einer kugelsegmentförmigen Oberseite zum reibschlüssigen Tragen der Kalottenoberschale hat. Die Andruckkraft der Andruckscheibe ist mit einer Welle stufenlos justierbar. Hierzu wirkt ein drehbarer Exzenter mit einer verschieblich gelagerten Welle zusammen.

Eine ähnliche Kalotte ist auch in dem deutschen Gebrauchsmuster 299 05 420 U1 beschrieben.

Die EP O 087 892 A1 zeigt eine Kalottenaufnahme, bei der die Andruckscheibe mit einer Feder vorgespannt ist.

In dem US-Patent 4,844,387 ist ein Geräteträgerarm für einen Computermonitor beschrieben, bei dem eine selbstarettierende Gasdruckfeder zum Halten des Geräteträgerarms in einer festgelegten Position vorgesehen ist. Ein Auslösegriff dient zum Öffnen und Schließen eines Ventils an dem Kopf der Gasdruckfeder. Um die Plattform des Geräteträgerarms nach oben zu bewegen, wird der Auslösehebel betätigt und das Ventil der Gasdruckfeder geöffnet. Hierdurch wird die Gasdruckfeder ausgelöst und sie dehnt sich aus. Um die Plattform nach unten zu bewegen, wird der Auslösehebel ebenfalls geöffnet, wobei die Gasdruckfeder jedoch manuell zusammengedrückt wird.

Aufgabe der Erfindung war es, einen verbesserten Geräteträgerarm zu schaffen, der mit einer Hand leicht bedienbar und der stufenlos verstellbar ist.

Die Aufgabe wird durch den Geräteträgerarm mit den Merkmalen des Patentanspruchs 1 dadurch gelöst, dass ein Betätigungselement zum stufenlosen Verstellen des Auslösehebels und des Arretierbolzens vorgesehen ist, um den Geräteträgerarm in seiner Höhe zu verstellen und in gewünschten Positionen zu arretieren.

Das Betätigungselement ist erfindungsgemäß als Kurvenscheibe mit einer Nase an seinem Umfang ausgeführt. Ein Hebelarm ist zum Drehen der Kurvenscheibe vorgesehen. Eine Steuerstange ist längstverschieblich in einem Steuerstangenlager getragen und steht im Eingriff mit dem Auslösehebel zur Betätigung des Arretierbolzens der Gasdruckfeder. Die Nase der Kurvenscheibe steht ihrerseits im Eingriff mit der Steuerstange, um diese in Längsrichtung zu verschieben und den Auslösehebel in Abhängigkeit von der Drehlage der Kurvenscheibe zu betätigen.

Auf diese Weise ist es möglich, mittels eines einfachen Betätigungselementes, das über einen Auslösehebel mit dem Arretierbolzen zusammen wirkt, den Trägerarm mit einer Hand leicht zu lösen und gleichzeitig in der Höhe zu verstellen.

Eine Feder sollte in Wirkverbindung mit der Steuerstange stehen, um diese in eine Ausgangsposition zurückzustellen, bei der der Arretierbolzen die Gasdruckfeder arretiert.

Mit Hilfe der Kurvenscheibe und der Nase in Verbindung mit der Steuerstange ist es möglich, eine Schwenkbewegung eines mit der Kurvenscheibe verbundenen Hebels einfach und wirkungsvoll in eine Längsbewegung umzurichten und den Auslösehebel bzw. den Arretierbolzen der Gasdruckfeder variabel zu betätigen.

Vorzugsweise ist die Kontaktfläche der Steuerstange mit der Nase geneigt. Besonders vorteilhaft ist es, wenn die Nase unsymmetrisch auf der Kurvenscheibe sitzt und wenn die von der Längsachse nach oben und unten gerichteten Neigungswinkel der Kontaktfläche unterschiedlich voneinander sind.

Auf diese Weise kann die Kurvenscheibe mit der Nase und der Steuerstange in einen begrenzten Einbauraum eingebaut werden.

Vorzugsweise ist ein Parallelogramm mit einem ersten Ende an das Fußteil und dem zweiten Ende an die Kalottenaufnahme so angelenkt, dass der Neigungswinkel der Kalottenaufnahme bei einem Verschwenken des Trägerarms konstant bleibt.
Auf diese Weise wird gewährleistet, dass ein von einer Kalotte getragenes Gerät nicht gekippt wird, wenn der Geräteträgerarm durch Verschwenken des Trägerarms verstellt wird. Die Kalotte zum Tragen des Gerätes wird hierbei von der Kalottenaufnahme aufgenommen.

Vorzugsweise hat der Geräteträgerarm eine Kalotte zum Tragen eines Gerätes mit einer kugelsegmentförmig gewölbten Kalottenoberschale, einer Andruckscheibe, die reibschlüssig in der Kalottenoberschale angeordnet ist, einem Kalottenunterteil mit einer kugelsegmentförmigen Oberseite zum reibschlüssigen Tragen der Kalottenoberschale und einer Welle, die sich durch das Kalottenunterteil, die Kalottenoberschale und die Andruckscheibe erstreckt. Die Welle hat eine Plattform oberhalb der Andruckscheibe und steht über die Plattform in Wirkverbindung mit der Andruckscheibe. Es ist erfindungsgemäß ein Hebel vorgesehen, um die Welle stufenlos in Längsrichtung zu verschieben. Auf diese Weise wird die Andruckkraft der Plattform an die Andruckscheibe und damit der Reibschluß der Kalottenoberschale variabel eingestellt. Durch die Verwendung einer kugelsegmentförmig gewölbten Kalottenoberschale in Verbindung mit dem stufenlos einstellbaren Reibschluß ist es möglich, die Kalotte stufenlos mit variabel einstellbarem Kraftaufwand zu verstellen. Das Lösen und Arretieren der Kalotte erfolgt hierbei auch wiederum durch einen leicht betätigbaren Hebel.

Der Geräteträgerarm und die Kalotte ist vorzugsweise für Geräte im medizinischen Bereich, insbesondere für Operationsgeräte wie, z. B. Monitore etc. einsetzbar. In diesem Anwendungsgebiet ist es für das operierende Personal unbedingt notwendig, einhändig leicht betätigbare Geräteträger und Kalotten verfügbar zu haben.

Die Erfindung wird nachfolgend anhand der beigefügten Zeichnungen näher erläutert. Es zeigen:
- Figur 1 -: Geräteträgerarm mit selbstarretierender Gasdruckfeder und ausgebauter Steuerstange im Querschnitt;
- Figur 2 -: Querschnitt des erfindungsgemäßen Geräteträgerarms mit Kalotte in zwei Schwenkpositionen;
- Figur 3 -: Geräteträgerarm mit Steuerstange und Kalottenaufnahme und ausgebauter Gasdruckfeder im Querschnitt;
- Figur 4 -: Explosionszeichnung des Geräteträgerarms;
- Figur 5 -: Kalotte für den Geräteträger im Querschnitt.

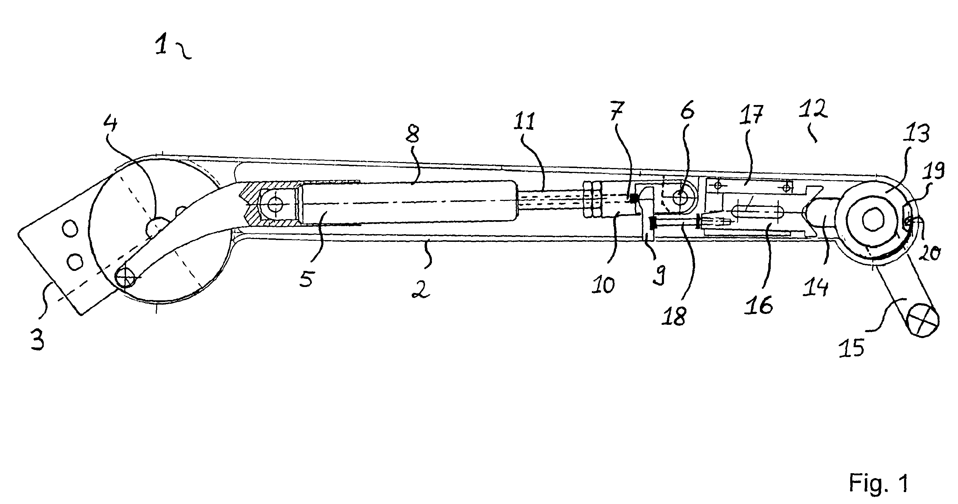

Die Figur 1 läßt einen Geräteträgerarm 1 erkennen, bei dem ein Trägerarm 2 verschenkbar an ein Fußteil 3 angelenkt ist. Das Fußteil 3 wird fest an eine Basis geschraubt oder ist z.B. in eine nicht dargestellte Schiene eingehängt. Der Trägerarm 2 und das Fußteil 3 haben eine gemeinsame Drehachse 4. Im radialen Abstand von der Drehachse 4 ist eine Gasdruckfeder 5 an das Fußteil 3 angelenkt. Der Kolbenarm der Gasdruckfeder 5 ist seinerseits an einem Anlenkpunkt 6 an den Trägerarm 2 angelenkt. Die Gasdruckfeder 5 ist selbstarretierend und hat einen Arretierbolzen 7, um die Gasdruckfeder 5 auszulösen bzw. zu arretieren. Wenn der Arretierbolzen 7 in Richtung des Kolbens 8 der Gasdruckfeder 5 gedrückt wird, wird die Gasdruckfeder in bekannter Weise freigegeben. Hierzu ist ein Auslösehebel 9 zur Betätigung des Arretierbolzens 7 vorgesehen, der in einem Anlenkkopf 10 zum Anlenken der Gasdruckfeder 5 an den Anlenkpunkt 6 gelagert ist. Der Anlenkkopf 10 ist auf den Kolbenarm 11 der Gasdruckfeder 5 aufgeschraubt.

Weiterhin ist ein Betätigungselement 12 vorgesehen, um den Auslösehebel 9 zu betätigen. Das Betätigungselement 12 besteht aus einer Kurvenscheibe 13 mit einer Nase 14 an seinem Umfang und einen Hebelarm 15 zum Drehen der Kurvenscheibe 13. Die Nase 14 steht im Eingriff mit einer Steuerstange 16, die längsverschieblich in einem Steuerstangenlager 17 getragen ist. Das Steuerstangenlager 17 ist fest in den Trägerarm 2 frontal vor dem Anlenkpunkt 6 eingebaut. In den Kopf der Steuerstange 16 ist eine Justierschraube 18 eingeschraubt, dessen Länge einstellbar ist. Die Justierschraube 18 steht im Eingriff mit dem Auslösehebel 9, um diesen gegen den Arretierbolzen 7 zum Lösen der Gasdruckfeder 5 zu drücken bzw. den Arretierbolzen 7 freizugeben.

Die Kurvenscheibe 13 hat eine Kerbe 19 an seinem Umfang. Der Trägerarm 2 hat einen Vorsprung 20 an seinem Kopf, der in die Kerbe 19 eingreift. Die Kerbe 19 und der Vorsprung 20 wirken so zusammen, dass die Kurvenscheibe 13 nur einem definierten Drehwinkel verschwenkbar ist.

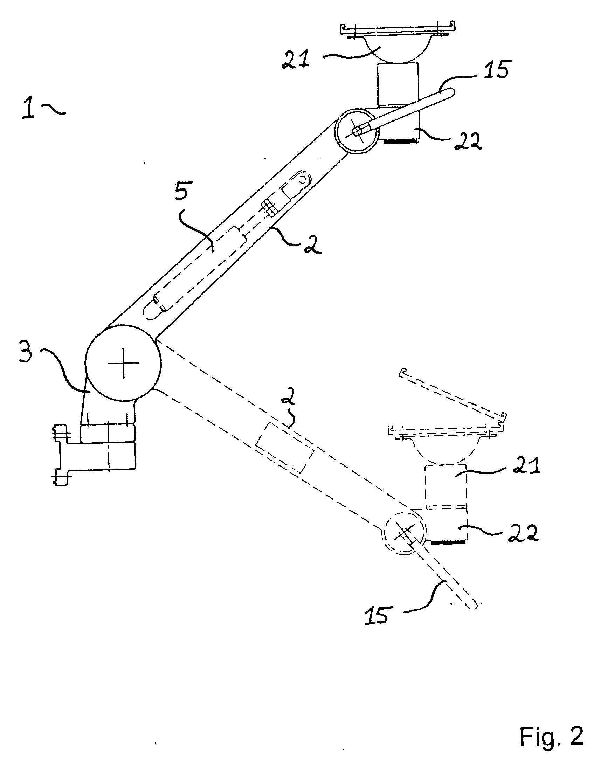

Die Figur 2 läßt den Geräteträgerarm 1 im Querschnitt in zwei Schwenkpositionen erkennen. Durch Betätigung des Hebels 15 wird der Arretierbolzen gelöst und der Geräteträgerarm 1 kann mit der gleichen Hand, mit der der Hebel 15 betätigt wird, leicht nach unten bzw. oben verschwenkt werden. Wenn der Geräteträgerarm 1 in der gewünschten Position ist, wird der Hebel 15 in die Ausgangsposition zurückgeschwenkt. Dann federn der Auslösehebel 9 und der Arretierbolzen 7 zurück und die Gasdruckfeder 5 arretiert selbsttätig und hält Geräteträgerarm 1 in der gewünschten Position. Um ein automatisches Zurückgleiten des Hebels 15 in die Ausgangsposition zu ermöglichen, ist eine nicht dargestellte Feder in der Führung der Steuerstange 16, die in der Figur 1 dargestellt ist, vorgesehen. Die Feder drückt die Steuerstange 16 zurück und sorgt gleichzeitig aufgrund der geneigten Kontaktflächen der Steuerstange 16 mit der Nase 15 zu einem selsttätigen Verschwenken des Hebels 15 in die Ausgangsposition.

In der dargestellten Ausführungsform ist die Nase 14 asymmetrisch an der Kurvenscheibe 13 angeordnet und die von der Längsachse nach oben und unten gerichteten Neigungswinkel der Kontaktfläche der Steuerstange 16 sind jeweils voneinander unterschiedlich.
Die Figur 2 läßt weiterhin eine Kalotte 21 zum Tragen eines nicht dargestellten Gerätes erkennen, die in eine Kalottenaufnahme 22 eingehängt ist. Die Kalottenaufnahme 22 ist drehbar an dem Kopf des Trägerarms 2 angeordnet.

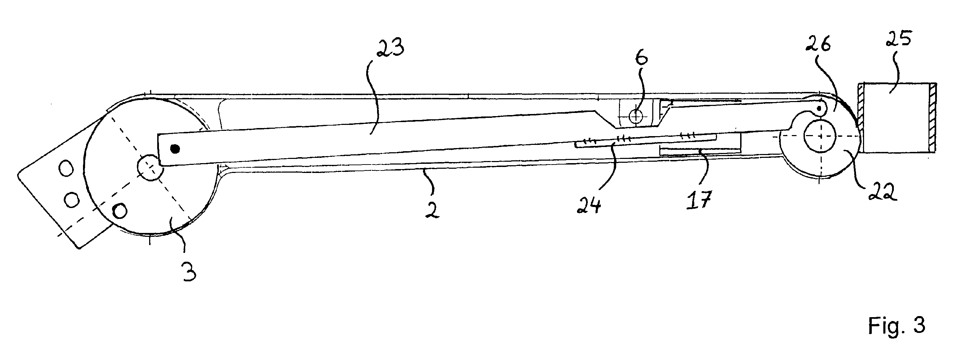

Die Figur 3 läßt den Geräteträgerarm 1 im Querschnitt mit ausgebauter Gasdruckfeder 5 erkennen. Es ist ein Parallelogrammarm (Zugstange) 23 vorgesehen, der schwenkbar an das Fußteil 3 und die Kalottenaufnahme 22 angelenkt ist. Die Anlenkpunkte befinden sich hierbei radial im Abstand von dem jeweiligen Drehpunkt des Fußteils 3 bzw. der Kalottenaufnahme 22. Der Parallelogrammarm 23 hat eine Aussparung im Bereich des Anlenkpunktes 6 der nicht dargestellten Gasdruckfeder an den Trägerarm 2. Zur Verstärkung des Parallelogrammarms 23 in dem ausgesparten Bereich ist ein Verstärkungsblech 24 quer zum Parallelogrammarm 23 an diesen angeschweißt.

Die Figur 3 läßt weiterhin die Konstruktion der Kalottenaufnahme 22 erkennen, die ein Aufnahmerohr 25 zur Aufnahme einer Kalotte hat. Das Aufnahmerohr 25 ist an den Umfang einer Drehscheibe 26 und quer hierzu geschweißt. Die Drehscheibe 26 ist in das Kopfende des Trägerarms 2 integriert und dort drehbar gelagert.

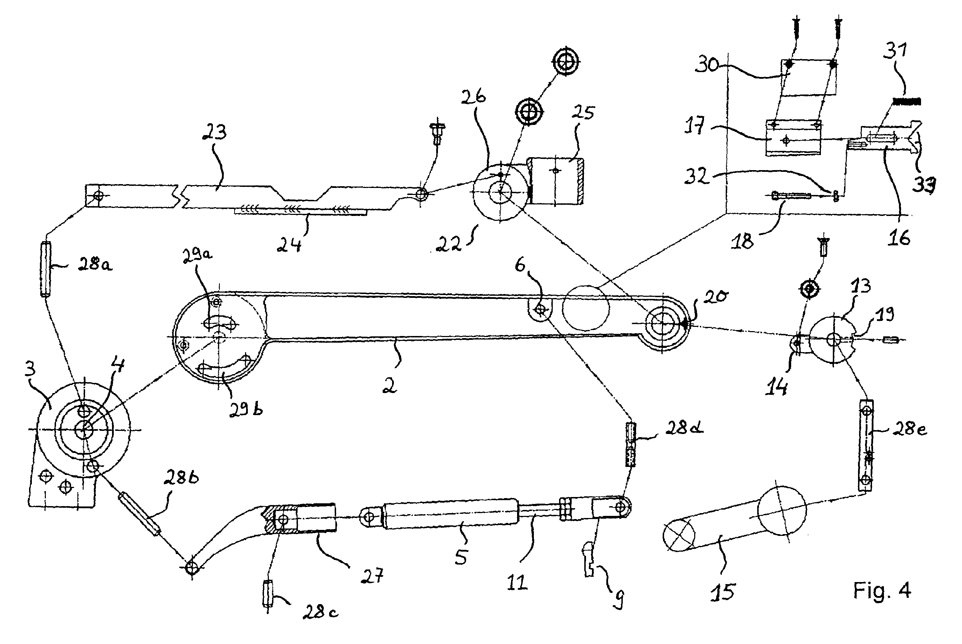

Die Figur 4 läßt den Geräteträgerarm 1 als Explosionszeichnung erkennen. Der Parallelogrammarm 23 und eine hintere Führung 27 der Gasdruckfeder 5 sind jeweils mit Bolzen 28a, 28b an das Fußteil 3 angelenkt. Die Gasdruckfeder 5 ist mit einem Bolzen 28c in die hintere Führung 27 eingebaut.

Der Trägerarm 2 ist um die Drehachse 4 schwenkbar in dem Fußteil 3 gelagert und hat Kreisausschnitte 29a, 29b, in denen die Bolzen 28a und 28b geführt sind.

Die Gasdruckfeder 5 hat an dem Kolbenarm 11 den Anlenkkopf 10, in dem der Auslösehebel 9 zur Betätigung des nicht dargestellten Arretierbolzens gelagert ist.

Die Gasdruckfeder 5 ist mit dem Arretierkopf 10 mittels eines Bolzens 28d an den Anlenkpunkt 6 des Trägerarms 2 angelenkt. Vor dem Anlenkpunkt 6 ist das Steuerstangenlager 17 eingebaut, das die Steuerstange 16 führt. Das Steuerstangenlager 17 ist mit einem Steuerstangenlagerdeckel 30 verschlossen. In die Führung der Steuerstange 16 ist eine Feder 31 eingebaut, um die Steuerstange 16 nach rechts in die Ausgangsposition zu drücken. Die Justierschraube 18 wird in den Kopf der Steuerstange 16 geschraubt und mit einer Mutter 32 in einer definierten Justierposition gehalten.

Zur Betätigung der Steuerstange 16 ist die Kurvenscheibe 13 in den Kopf des Trägerarms 2 integriert. Die Kurvenscheibe 13 hat eine um die Querachse in der Höhe der Drehachse der Kurvenscheibe 13 versetzte Nase 14, die im Eingriff mit Kontaktflächen 33 der Steuerstange 16 steht. Die Kontaktflächen 33 sind von der Längsachse der Steuerstange 16 gesehen nach oben und unten gerichtet und haben voneinander unterschiedliche Neigungswinkel.

Der Hebel 15 ist mit einem Bolzen 28e mit der Kurvenscheibe 13 fest verbunden, so dass die Kurvenscheibe 13 mit Hilfe des Hebels 15 geschwenkt werden kann. Die Kurvenscheibe 13 hat eine Kerbe 19, die mit einem Vorsprung 20 an dem Kopfende des Trägerarms 2 zusammen wirkt, so dass die Kurvenscheibe 13 nur im definierten Winkel verschwenkt werden kann.

In dem Kopfende des Trägerarms 2 ist weiterhin die Kalottenaufnahme 22 verschwenkbar gelagert. Die Kalottenaufnahme 22 besteht aus der Drehscheibe 26 und dem quer dazu an seinem Umfang verschweißten Aufnahmerohr 25 für eine Kalotte. Der Parallelogrammarm 23 ist radial im Abstand von dem Drehpunkt der Kalottenaufnahme an diese angelenkt.

Der Parallelogrammarm 23 gewährleistet, dass die Kalottenaufnahme 22 immer im definierten Winkel steht, so dass das Aufnahmerohr 25 vorzugsweise vertikal nach oben ausgerichtet ist, auch wenn der Geräteträgerarm 1 in seiner Höhe durch Verschwenken des Trägerarms 2 verstellt wird.

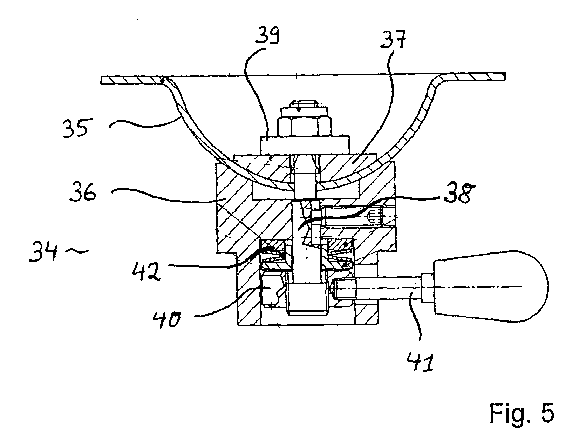

Die Figur 5 läßt eine Kalotte 34 zur Aufnahme in die Kalottenaufnahme 22 des Geräteträgerarms 1 erkennen. Die Kalotte 34 besteht im wesentlichen aus einer Kalottenoberschale zum Tragen eines Gerätes. Auf die Kalottenoberschale kann auch eine zusätzliche Plattform aufgebaut werden, auf die das Gerät gestellt wird. Die Kalottenoberschale 35 ist kugelsegmentförmig gewölbt und wird von einem entsprechend geformten Kalottenunterteil getragen. Durch Verlagern der Kalottenoberschale 35 relativ zum Kalottenunterteil 36 wird der Neigungswinkel der Kalotte 34 stufenlos eingestellt. Zur reibschlüssigen Fixierung der Kalottenoberschale 35 ist eine Andruckscheibe 37 in der Kalottenoberschale 35 angeordnet, die formschlüssig auf der Kalottenoberschale 35 aufliegt und entsprechend kugelsegmentförmig gewölbt ist. Eine Welle 38 erstreckt sich durch das Kalottenunterteil 36, die Kalottenoberschale 35 und die Andruckscheibe 37. Die Welle 38 hat eine Plattform 39 an seinem oberen Ende, um die Andruckscheibe 37 nach unten gegen die Kalottenoberschale 35 zu drücken, wenn die Welle 38 in Längsrichtung nach unten bewegt wird. Hierzu ist ein Trapezgewinde an dem unteren Ende der Welle 38 vorgesehen, die in Wirkverbindung mit einer Gegenmutter 40 steht. Die Gegenmutter 40 ist auf das Trapezgewinde aufgeschraubt und wird mit einem Hebel 41 gedreht. Die Gegenmutter 40 wird von dem Kalottenunterteil 36 abgestützt, wobei ein Federelement 42 zwischen der Gegenmutter 40 und dem Kalottenunterteil 36 vorgesehen ist, um eine ständige Spannung und damit einen minimalen Reibschluß zwischen Andruckscheibe 37, Kalottenoberschale 35 und Kalottenunterteil 36 zu gewährleisten. Auf diese Weise kann durch Verschwenken des Hebels 41 in horizontaler Richtung die Gegenmutter 40 relativ zu dem Drehgewinde der Welle 38 verdreht und die Andruckkraft stufenlos variiert werden, die über das Federelement 42, die Gegenmutter 40, die Welle 38 und die Plattform 39 von der Andruckscheibe 37 auf die Kalottenoberschale 35 wirkt.

Der Geräteträgerarm 1 und die Kalotte 34 ist vorzugsweise für medizinische Geräte und insbesondere im Krankenhausbereich zum Tragen von Operationsgeräten, wie z.B. Monitoren, geeignet.

## Patentansprüche

1. Geräteträgerarm (1) mit einem verschwenkbar an ein Fußteil (3) angelenkten Trägerarm (2), mit einer Kalottenaufnahme (22) zum Tragen eines Gerätes, wobei die Kalottenaufnahme (22) verschwenkbar an den Trägerarm (2) angelenkt ist, mit einer selbstarretierenden Gasdruckfeder (5), die an das Fußteil (3) und den Trägerarm (2) angelenkt ist, und mit einem Auslösehebel (9), der mit einem Arretierbolzen (7) der Gasdruckfeder (5) zum Auslösen bzw. Arretieren zusammen wirkt, **dadurch gekennzeichnet, dass** ein Betätigungselement (12) zum stufenlosen Verstellen des Auslösehebels und des Arretierbolzens eine Kurvenscheibe (13) mit einer Nase (14) an seinem Umfang, einen Hebelarm zum Drehen der Kurvenscheibe (13) und eine Steuerstange (16, 23) aufweist, wobei die Steuerstange (16, 23) längsverschieblich in einem Steuerstangenlager (17) getragen ist, die Nase (14) der Kurvenscheibe (13) im Eingriff mit der Steuerstange (16,23) und die Steuerstange (16, 23) im Eingriff mit dem Auslösehebel (9) steht.

2. Geräteträgerarm (1) nach Anspruch 1, **dadurch gekennzeichnet, dass** eine Feder in Wirkverbindung mit der Steuerstange (16, 23) steht, um diese in eine Ausgangsposition zurückzustellen, bei der der Arretierbolzen (7) die Gasdruckfeder (5) arretiert.

3. Geräteträgerarm (1) nach Anspruch 1 oder 2, **dadurch gekennzeichnet, dass** die Kontaktfläche (33) der Steuerstange (16, 23) mit der Nase (14) geneigt ist.

4. Geräteträgerarm (1) nach Anspruch 3, **dadurch gekennzeichnet, dass** die von der Längsachse nach oben und unten gerichteten Neigungswinkel der Kontaktfläche (33) unterschiedlich voneinander sind.

5. Geräteträgerarm (1) nach einem der vorhergehenden Ansprüche, **dadurch gekennzeichnet, dass** ein Parallelogrammarm (23) mit einem ersten Ende an das Fußteil (3) und mit einem zweiten Ende an die Kalottenaufnahme (22) jeweils radial im Abstand von dem Drehpunkt des Fußteils (3) und der Kalottenaufnahme (22) so angelenkt ist, dass der Neigungswinkel der Kalottenaufnahme (22) bei einem Verschwenken des Trägerarms (2) konstant bleibt.

6. Geräteträgerarm (1) nach einem der vorhergehenden Ansprüche mit einer Kalotte (21) zum Tragen eines Gerätes, wobei die Kalotte (2) eine kugelsegmentförmig gewölbte Kalottenoberschale (35), eine Andruckscheibe (37), die reibschlüssig in der Kalottenschale angeordnet ist, ein Kalottenunterteil (36) mit einer kugelsegmentförmigen Oberseite zum reibschlüssigen Tragen der Kalottenoberschale (35), und eine Welle hat, die sich duch das Kalottenunterteil (36), die Kalottenober- schale (35) und die Andruckscheibe (37) erstreckt und mit einer Plattform (39) oberhalb der Andruckscheibe (37) in Wirkverbindng mit der Andruckscheibe (37) steht, **dadurch gekennzeichnet, dass** ein Hebel vorgesehen ist, um die Welle (38) stufenlos in Längsrichtung zu verschieben und den Reibschluß der Kalottenoberschale (35) variabel einzustellenwobei, die Welle (38) ein Trapezgewinde hat und eine von dem Hebel (41) betätigte Gegenmutter (40) auf das Trapezgewinde aufgeschraubt ist, die von dem Kalottenunterteil (36) abgestützt wird.

7. Geräteträgerarm (1) nach Anspruch 6, **dadurch gekennzeichnet, dass** die Gegenmutter (40) mit einem Federelement von dem Kalottenunterteil (36) abgestützt wird.
